# EUROPÄISCHE PATENTSCHRIFT

(11) **EP 3 394 480 B1**
(45) Veröffentlichungstag und Bekanntmachung des Hinweises auf die Patenterteilung: **25.08.2021**
(21) Anmeldenummer: 16805799.0
(22) Anmeldetag: 02.12.2016
(51) Int. Cl.: F16H 61/56, F16D 33/04, F16H 41/04, F16H 41/26, F03B 13/10, F04D 25/06, F04D 13/08

(54) **UNTERWASSER-ANTRIEBSEINHEIT**
UNDERWATER DRIVE UNIT
UNITÉ D'ENTRAÎNEMENT IMMERGÉE

(30) Priorität: 23.12.2015 DE 102015226640
(43) Veröffentlichungstag der Anmeldung: 31.10.2018
(73) Patentinhaber: Voith Patent GmbH, 89522 Heidenheim (DE)
(72) Erfinder: FIGLER, Herr Thomas, 74564 Crailsheim (DE)
(74) Vertreter: Voith Patent GmbH - Patentabteilung
(86) Internationale Anmeldenummer: PCT/EP2016/079536
(87) Internationale Veröffentlichungsnummer: WO 2017/108375

(56) Entgegenhaltungen:
- EP-A2- 2 530 326
- WO-A1-2015/071042
- DE-A1- 2 505 092
- DE-B3-102004 011 033

## Beschreibung

Die vorliegende Erfindung betrifft eine Unterwasser-Antriebseinheit, im Einzelnen mit den Merkmalen aus dem Oberbegriff von Anspruch 1.

Unterwasser-Antriebseinheiten sind in einer Vielzahl von Ausführungen aus dem Stand der Technik vorbekannt und gelangen zum Antrieb von unter Wasser angeordneten Arbeitsmaschinen zum Einsatz, wie beispielsweise Arbeitsmaschinen in auf dem Meeresboden stationär installierten Fördereinrichtungen zur Förderung von Öl und Gas. Da es sich um sehr komplexe Systeme handelt, sind die einzelnen Antriebseinheiten Bestandteil eines Gesamtantriebsstranges für derartige Fördereinrichtungen und dienen primär zum drehzahlvariablen Antrieb einer Pumpe oder eines Kompressors. Derartige Unterwasser-Antriebseinheiten zum Antrieb einer drehzahlvariablen Maschine umfassen im einfachsten Fall einen elektrischen Motor und einen mit dem Motor verbundenen hydrodynamischen Drehzahl-/Drehmomentwandler. Der hydrodynamische Drehzahl-/Drehmomentwandler weist zumindest ein um eine Drehachse rotierbares Pumpenrad, zumindest ein um eine Drehachse rotierbares Turbinenrad und zumindest ein Leitrad auf, wobei die Schaufelräder einen mit Betriebsmittel durchströmbaren Arbeitsraum zur Ausbildung einer hydrodynamischen Kreislaufströmung bilden. Die Unterwasserantriebseinheit weist ferner eine mit einer Maschine, insbesondere Arbeitsmaschine mit variabler Drehzahl zumindest mittelbar verbundene Ausgangswelle auf. Der elektrische Motor und der hydrodynamische Drehzahl-/Drehmomentwandler sind in einem mit Druckmittel befüllbaren gemeinsamen Gehäuse angeordnet. Bei der drehzahlvariabel anzutreibenden Maschine handelt es sich beispielsweise direkt um eine Pumpe oder einen Kompressor. Denkbar sind auch Ausführungen der UnterwasserAntriebseinheit gemäß einer der nachfolgenden Druckschriften, bei welchen die elektrische Maschine über ein hydrodynamisches Getriebe einen Generator antreibt, welcher wiederum über einen Motor mit einer Arbeitsmaschine gekoppelt ist:
- WO 2013/077744 A1
- WO 2013/039404 A1

Ferner offenbart EP 2 530 326 A2 eine Unterwasser-Antriebseinheit bei welcher ein Kompressormotor über einen hydrodynamischen Drehmomentwandler eine Hydraulikpumpe antreibt.

Um insbesondere die Vorteile einer variablen Einstellung der Drehzahl auch während des Betriebes zu gewährleisten, kann der Wandler über eine Einrichtung verfügen, die eine Veränderung der Kreislaufströmung im Betrieb ermöglicht, insbesondere eine Stellschaufel. Derartige Wandler werden auch beeinflussbare Wandler genannt. Ein Beispiel für einen derartigen Wandler ist der Stellwandler, dessen Schaufeln im Betrieb von außen verstellt werden können.

Aus der Druckschrift DE 10 2004 011 033 B3 ist eine Ausführung eines mehrstufigen und mehrteiligen Wandlers vorbekannt, bei welchem mehr als ein Leitrad vorgesehen ist. Die einzelnen von diesen gebildeten Schaufelkränze sind auf unterschiedlichen Durchmessern und unterschiedlichen Stellen im Strömungskreislauf angeordnet. Insgesamt sind drei Leitschaufelkränze vorgesehen, die im Strömungskreislauf an unterschiedlichen Stellen zwischen Pumpen- und Turbinenrad zum Einsatz gelangen. Dabei ist ein erster Schaufelkranz eines ersten Leitrades im Strömungskreislauf zwischen Pumpen- und Turbinenrad auf einem größeren und damit radial äußeren Durchmesser angeordnet, während die anderen beiden Schaufelkränze auf einem radial inneren Durchmesser in Durchströmungsrichtung zwischen Turbinen- und Pumpenrad an einem Leitrad oder mehreren axial nebeneinander angeordneten Leiträdern angeordnet sind. Einer der beiden radial inneren Schaufelkränze ist feststehend, der andere weist Stellschaufeln auf. Die Verstellung erfolgt über eine Verstellvorrichtung, umfassend eine Verstellwelle, welche in radialer Richtung sich vom Außenumfang durch den Kernraum bis zum radial inneren Schaufelkranz mit Stellschaufel erstreckend angeordnet ist, wobei die Betätigungseinrichtung für die Verstellwelle in radialer Richtung am Außenumfang des Wandlers angeordnet ist. Diese Verstellvorrichtung ist durch eine einen hohen Bauraumbedarf in axialer und radialer Richtung charakterisiert, der bei Integration in Antriebsstränge mit zu berücksichtigen ist. Insbesondere beim Einsatz von derartigen Wandlern in Subsea- bzw. Unterwasseranwendungen ist dies von Nachteil, da die Verstellvorrichtung ebenfalls bei der Ausbildung eines diesen umschließenden Gehäuses mit berücksichtigt werden muss und daher ein Wandler mit einer Verstellvorrichtung vordefinierten Typs nicht ohne weiteres gegen einen anderen ausgetauscht werden kann. Entweder baut das Gehäuse sehr groß, ist in Abhängigkeit der Ausführung der Verstellvorrichtung sehr komplex gestaltet oder bei sperrigen Verstellmechanismen, welche separat durch das Gehäuse zu führen sind, ist ein hoher Aufwand zur Abdichtung erforderlich. Ein weiterer Nachteil der vorbenannten Ausführung besteht in der damit verbundenen Kreuzung des Strömungskreislaufes durch die Verstellwelle und der daraus resultierenden Verlustleistung in einem Bereich des Strömungskreislaufes, der durch einen sehr hohen Energiegehalt charakterisiert ist.

Eine alternative Ausbildung besteht in der Anordnung der Verstellvorrichtung derart, dass die Verstellung der Stellschaufeln von innen her über eine durch eine Antriebswelle des Wandlers verlaufende Verstellwelle erfolgt, die über einen Winkeltrieb auf die Stellschaufeln einwirkt. Diese Ausführung ist jedoch durch einen hohen konstruktiven Aufwand charakterisiert.

Der Erfindung lag daher die Aufgabe zugrunde, eine Unterwasser-Antriebseinheit mit einem hydrodynamischen Drehzahl-/Drehmomentwandler mit zumindest einer verstellbaren Stellschaufel derart weiterzuentwickeln, dass die vorgenannten Nachteile vermieden werden. Insbesondere ist ein Wandler mit Stellschaufeln und einer Verstellvorrichtung derart zu integrieren, dass die Unterwasser-Antriebseinheit in radialer und axialer Richtung möglichst wenig zusätzlichen Bauraum benötigt, eine einfache Gehäusegestaltung erfordert und die Verlustleistung durch den sich einstellenden Strömungskreislauf kreuzende Komponenten reduziert wird.

Die erfindungsgemäße Lösung ist durch die Merkmale des Anspruchs 1 charakterisiert. Vorteilhafte Ausgestaltungen sind in den Unteransprüchen beschrieben.

Der Begriff Drehachse beschreibt insbesondere die geometrische Achse, um welche eine Rotation erfolgt. Diese fällt dabei mit der Mittenachse bzw. Drehachse der Schaufelräder, insbesondere Pumpenrad und Turbinenrad beziehungsweise der mit diesen verbundenen An- und Abtriebswellen zusammen.

Die erfindungsgemäße koaxiale Anordnung des Stellantriebes bietet den Vorteil einer drehachsnahen Integration des Stellantriebes in die UnterwasserAntriebseinheit, wobei das die elektrische Maschine und den Wandler umschließende Gehäuse vereinfacht werden kann.

Die zumindest eine Stellschaufel ist an dem Leitrad des hydrodynamischen Drehzahl-/Drehmomentwandlers vorgesehen. Da das Leitrad in der Regel ortsfest ist oder sich an einem Freilauf abstützt, kann der Stellantrieb aufgrund der möglichen Anbindung an ein ortsfestes Bauteil - das Leitrad oder gegebenenfalls an das Wandlergehäuse - sehr einfach ausgebildet werden.

Bezüglich der Anordnung des Stellantriebs bestehen grundsätzlich zwei Möglichkeiten. Eine erste besonders vorteilhafte Möglichkeit ist dadurch gekennzeichnet, dass die Verstellvorrichtung einen im stationären Kernraum der Kreislaufströmung angeordneten und mit der wenigstens einen Stellschaufel oder dem verstellbaren Schaufelsegment zur Übertragung einer Stellkraft gekoppelten Stellantrieb umfasst.

Unter dem Kernraum wird insbesondere der stationäre Raum verstanden, der von dem im Axialschnitt durch den Wandler (Ebene, die durch die Drehachse und eine Senkrechte zu dieser charakterisiert ist) torusförmigen Arbeitsraum umschlossen ist. Diese Lösung bietet den Vorteil, dass aufgrund der Integration des Stellantriebes in den Kernraum der radiale Bauraumbedarf für den Wandler mit der Stelleinrichtung nicht über den ohnehin für den Wandler erforderlichen Bauraum in radialer Richtung hinausgeht. Bei Anwendungen im Subsea-Bereich kann die sich daraus ergebende Abdichtproblematik in den Wandler verlegt werden und wird damit vereinfacht.

Ferner bietet die zentrale Anordnung in Abhängigkeit der Ausbildung des Wandlers den Vorteil, dass eine Kreuzung des Strömungskreislaufes in einem Bereich, in welchem diese durch einen hohen Energiegehalt charakterisiert ist, reduziert wird. Die Anordnung im Kernraum ist dabei auch unabhängig von der Ausgestaltung des Wandlers selbst, d.h. der Anordnung der Schaufelräder in der Kreislaufströmung.

Erfindungsgemäß ist der Stellantrieb in axialer Richtung betrachtet dem Wandler nebengeordnet und ist durch eine maximale radiale Erstreckung charakterisiert, die innerhalb der maximalen radialen Erstreckung von elektrischem Motor und hydrodynamischen Drehzahl-/Drehmomentwandler liegt. Dabei erfolgt die Anordnung vorzugsweise zwischen elektrischem Motor und Wandler bei Anordnung des Schaufelrades mit der Stellschaufel zur elektrischen Maschine gerichtet. Diese Lösung ermöglicht ebenfalls eine sehr kompakt bauende Einheit.

Der Stellantrieb kann dabei mit der wenigstens einen Stellschaufel oder dem verstellbaren Schaufelsegment direkt oder über eine Übertragungseinrichtung verbunden sein. Die erstgenannte Möglichkeit ist durch einen einfachen Aufbau und eine geringe Bauteilanzahl aufgrund hoher Funktionskonzentration charakterisiert. Die zweite Möglichkeit bietet den Vorteil, durch die Ausgestaltung der Übertragungseinrichtung eine Übersetzung zwischen der Verstellbewegung des Antriebes und der Verstellbewegung der Stellschaufel vorzusehen und/oder Abstände zwischen diesen zu überbrücken.

In einer vorteilhaften Ausbildung sind der Stellantrieb und die Übertragungseinrichtung in einer axialen Ebene angeordnet. Diese Lösung bietet den Vorteil geringsten axialen Bauraumbedarfs.

Erfindungsgemäß zeichnet sich der Wandler dadurch aus, dass die Verstellvorrichtung einen Stellantrieb mit Ringelementen aufweist, die jeweils koaxial zur Antriebswelle angeordnet sind. Ein erstes Ringelement ist dabei mit der wenigstens einen Stellschaufel zur Übertragung einer Stellkraft oder eines Stellmomentes wenigstens mittelbar, d.h. direkt oder über weitere Übertragungseinrichtungen verbunden, beispielsweise in Form einer Umlenkeinrichtung. Das erste Ringelement ist relativ zu einem zweiten Ringelement in Umfangsrichtung der Drehachse verdrehbar.

Wenigstens mittelbar bedeutet direkt oder indirekt unter Zwischenordnung weiterer Übertragungselemente.

Dies hat den Vorteil, dass nur wenig verschleißbehaftete, mechanische Bauteile erforderlich sind, um eine Stellkraft oder ein Stellmoment zu erzeugen. Dies wird allgemein dadurch erreicht, dass die Krafterzeugung, Einleitung und ggf. auch die Übertragung im Wesentlichen durch rotatorische Bewegungen von Elementen der Verstellvorrichtung erfolgt. Konkret kann dies dadurch erreicht werden, dass Ringelemente vorgesehen sind, die den Stellantrieb bilden und die in Umfangsrichtung der Drehachse relativ zueinander verdrehbar sind. Das erste Ringelement ist dann direkt oder über eine Übertragungseinrichtung, welche in Form einer Umlenkeinrichtung ausgebildet sein kann, mit der Stellschaufel oder dem verstellbaren Schaufelsegment gekoppelt. Das durch die Relativdrehung des ersten Ringelements bezogen auf das zweite Ringelement erzeugte Stellmoment bzw. die Stellkraft wird entweder direkt oder die Übertragungseinrichtung in die Stellschaufel eingeleitet und halten diese in der gewünschten Stellung.

Die Ringelemente sind jeweils koaxial zur Antriebswelle angeordnet, was zu einem kompakten Aufbau des Stellantriebs führt.

In einer vorteilhaften Ausführung ist das zweite Ringelement drehfest mit dem die Stellschaufel tragenden Leitrad verbunden oder wird in einer weiteren Weiterbildung von diesem gebildet. Durch eine Einstellung der Winkellage zwischen dem ersten und zweiten Ringelement wird die Position der Stellschaufel oder des verstellbaren Schaufelsegmentes beeinflusst.

Bei Vorsehen mehrerer ortsfest angeordneter Leiträder kann auch eine Anbindung an ein anderes der Leiträder erfolgen.

Erfindungsgemäß bilden das erste und zweite Ringelement wenigstens zwei in Umfangsrichtung der Drehachse angeordnete Druckkammern, die für die Relativdrehung zwischen dem ersten und zweiten Ringelement jeweils mit Druck beaufschlagbar sind. Die Betätigung des ersten Ringelements erfolgt dann vorzugsweise hydraulisch, da hier auf das gleiche Medium wie das Betriebsmedium zurückgegriffen werden kann. Auch werden mechanische Stellglieder, wie bspw. Rückstellfedern, vermieden. Die Rückstellung bzw. allgemein die Positionsänderung des ersten Ringelements erfolgt hydraulisch. Durch die beiden Druckkammern kann die Positionsänderung in beiden Umfangsrichtungen vorgenommen werden.

Durch Einstellung geeigneter Drücke in den Druckkammern kann eine Winkellage der beiden Ringelemente und somit ein gewünschter Anstellwinkel der Stellschaufel gehalten werden. Ein weiterer Vorteil dieser Ausführung ist die stufenlose und feinfühlige Verstellbarkeit der Stellschaufel.

In einer Weiterbildung der vorgenannten Ausführungsformen kann dabei eines der Ringelemente - das erste Ringelement oder das zweite Ringelement - ein zylinderförmiges Gehäuse bilden, in dem dann das andere Ringelement - zweites Ringelement oder erstes Ringelement - angeordnet ist. Damit wird eine besonders kompakte Ausgestaltung des Stellantriebs erreicht. Denkbar ist auch die umgekehrte Ausbildung, d.h. dass das zweite Ringelement ein zylinderförmiges Gehäuse bildet, in dem das erste Ringelement angeordnet ist.

Vorzugsweise weisen das erste und zweite Ringelement jeweils radial sich erstreckende, gegengleich angeordnete Flügel auf, die die Druckkammern in Umfangsrichtung begrenzen. Die gegengleich angeordneten Flügel greifen dabei ineinander ein und können in Umfangsrichtung so voneinander beabstandet werden, dass Druckkammern mit veränderbarem Volumen gebildet werden. Durch Beaufschlagung der Druckkammern mit unterschiedlichen Drücken, wird das erste Ringelement bezogen auf das zweite Ringelement im Uhrzeigersinn oder im Gegenuhrzeigersinn gedreht. Dadurch ist eine Verstellung der Stellschaufel in verschiedenen Richtungen möglich.

Die Flügel können zur Abdichtung der Druckkammern radial angeordnete Dichteinrichtungen und/oder axiale Dichteinrichtungen aufweisen. Die Dichteinrichtungen umfassen zumindest ein Dichtelement oder können auch als berührungslose Dichteinrichtungen ausgeführt sein.

Die Druckkammern weisen bei einer bevorzugten Ausführungsform in Umfangsrichtung der Drehachse angeordnete Anschläge zur Begrenzung der Relativdrehung zwischen dem ersten und zweiten Ringelement auf. Die Anschläge legen somit den Hub des ersten Ringelements in Umfangsrichtung fest. Die Anschläge können austauschbar ausgebildet sein, sodass zum einen bei Verschleiß die Anschläge ersetzt und zum anderen der Hub bzw. Stellweg des ersten Ringelements eingestellt werden kann.

Das erste Ringelement kann allgemein als ein rotierender Zylinder aufgefasst werden, dessen Hub in Umfangsrichtung wirkt.

Vorzugsweise sind in wenigstens einem Ringelement, insbesondere im zweiten Ringelement Bohrungen ausgebildet, die zur Druckbeaufschlagung in die Druckkammern, insbesondere im Bereich des Außendurchmessers münden. Die Ausbildung der Bohrungen im zweiten Ringelement hat den Vorteil, dass die Zufuhrkanäle im Leitrad gebildet sein können, die mit den im zweiten Ringelement ausgebildeten Bohrungen fluidverbunden sind. Die Mündung der Bohrungen im Bereich des Außendurchmessers des zweiten Ringelements hat den Vorteil, dass dadurch eine Spülung der Druckkammern erreicht wird. Etwaige am Außendurchmesser anhaftende Verunreinigungen, die sich im Betrieb dort ansammeln, werden durch die Einleitung des Arbeitsmediums im Bereich des Außendurchmessers gelöst bzw. vermieden.

Bei einer besonders bevorzugten Ausführungsform weist die Übertragungseinrichtung einen Verstellring auf, der koaxial zur Drehachse angeordnet und drehfest mit dem ersten Ringelement verbunden ist. Der Verstellring ist mit der wenigstens einen Stellschaufel zur Übertragung einer Stellkraft oder eines Stellmomentes gekoppelt. Der Verstellring trägt zur kompakten Bauweise des Wandlers bei, da dieser, wie die Ringelemente, koaxial zur Antriebwelle angeordnet ist. Durch die drehfeste Verbindung des Verstellringes mit dem ersten Ringelement werden etwaige mechanische Koppelbauteile vermieden. Vielmehr wird das für die Verstellung der Stellschaufel erforderliche Stellmoment direkt vom ersten Ringelement in den Verstellring eingeleitet. Die drehfeste Verbindung zwischen dem Verstellring und dem Ringelement kann beispielsweise durch eine stoffschlüssige Verbindung wie eine Schweißverbindung, oder durch form- oder kraftschlüssige Verbindungen erreicht werden.

Die Kopplung des Verstellrings mit der Stellschaufel kann in einer Variante dadurch erfolgen, dass der Verstellring wenigsten einen Nocken aufweist, der mit einem Kurbeltrieb zusammen wirkt. Der Kurbeltrieb ist mit der Stellschaufel gekoppelt. Die Ansteuerung der Stellschaufel durch einen Kurbeltrieb ist an sich bekannt, sodass diesbezüglich auf bereits vorhandene Konstruktionen zurückgegriffen werden kann. Die Ausbildung des Nockens am Verstellring hat gegenüber dem Stand der Technik den Vorteil, dass für die Krafteinleitung in den Kurbeltrieb keine gesonderten mechanischen Bauteile erforderlich sind. Vielmehr wird der Kurbeltrieb direkt durch den Nocken betätigt. Die Rückstellkraft wird durch das an der Stellschaufel anliegende Moment im Arbeitsraum erzeugt. Vorzugsweise bildet der Kurbeltrieb ein radial angeordnetes Hebelelement, das die Drehbewegung des Verstellrings in eine translatorische Bewegung umwandelt. Durch die Kopplung des Hebelelements mit der Stellschaufel wird in an sich bekannte Weise die Stellbewegung erreicht.

Bei einer alternativen Variante weist der Verstellring eine Außenverzahnung auf, die mit der Außenverzahnung eines Zapfens der Stellschaufel kämmt. Der Zapfen erstreckt sich parallel zur Mittelachse des Verstellringes. Diese Ausführung hat den Vorteil, dass die rotatorische Bewegung des Verstellringes direkt in eine Drehbewegung der Stellschaufel umgewandelt wird. Damit wird die Anzahl der mechanischen Bauteile weiter reduziert.

Die Stellschaufel kann eine Stellschaufel oder eine mehrgliedrige Schaufel mit wenigstens einem verstellbaren Schaufelsegment, insbesondere Verdrehsegment umfassen. Stellschaufeln und mehrgliedrige Schaufeln sind an sich bekannt, wobei eine Stellschaufel eine einteilige Stellschaufel bedeutet, die als Ganzes verstellbar ist. Bei einer mehrgliedrigen Schaufel steht ein Schaufelsegment fest. Wenigstens ein weiteres Schaufelsegment ist verdrehbar. Der Antrieb für das verdrehbare Schaufelsegment wird durch die Verstellvorrichtung bewirkt.

Bei den Stellschaufeln oder verstellbaren Schaufelsegmenten handelt es sich um drehbar gelagerte Schaufeln beziehungsweise Schaufelteile, deren Winkellage gegenüber einer durch die Erstreckung in radialer Richtung beschreibbaren Ausgangslage durch Verdrehen um eine vordefinierte Drehachse veränderbar ist. Die Ausgangslage beschreibt eine erste Funktionsstellung, jede weitere aus dieser ausgelenkte Lage eine weitere Funktionsstellung.

Die Erfindung ist in besonders vorteilhafter Ausbildung für einen Wandler in Form eines Hochtriebswandlers mit den folgenden Merkmalen geeignet:
ein Pumpenrad, das im Betrieb von innen nach außen durchströmt ist;
ein Turbinenrad, das im Betrieb von außen nach innen durchströmt ist;
erste Leitschaufeln zwischen Pumpenrad und Turbinenrad;
zweite Leitschaufeln zwischen Turbinenrad und Pumpenrad, wobei erste und zweite Leitschaufeln an unterschiedlichen Leiträdern und auf unterschiedlichen Durchmessern angeordnet sind und die zweiten Leitschaufeln wenigstens die zumindest eine Stellschaufel oder ein verstellbares Schaufelsegment umfassen.

In einer weiteren möglichen und vorteilhaften Ausbildung dieser vorgenannten Wandlerausführung liegen die Austrittskanten des Pumpenrades auf einem Radius R, der zwischen dem 1,2 bis 8-fachen des Radius r beträgt, auf welchem sich die Eintrittskanten des Turbinenrades befinden, womit ein Hochtriebswandler realisiert wird. In einer vorteilhaften Weiterbildung liegen die Eintrittskanten der Schaufeln des Pumpenrades dabei auf einem größeren Radius als die Eintrittskanten der Schaufeln des Turbinenrades.

Die Erfindung wird nachfolgend mit weiteren Einzelheiten unter Bezug auf die beigefügten Zeichnungen näher beschrieben. Darin zeigen:
- Fig. 1:: in schematisiert stark vereinfachter Darstellung beispielhaft einen erfindungsgemäßen Unterwasser-Antrieb;
- Fig. 2a und 2b:: in schematisiert vereinfachter Darstellung einen Längsschnitt eines Wandlers mit einer ersten vorteilhaften Anordnung des Stellantriebes und der Übertragungseinrichtung;
- Fig. 3:: in schematisiert vereinfachter Darstellung einen Längsschnitt eines Wandlers mit einer alternativen Anordnung des Stellantriebes und der Übertragungseinrichtung;
- Fig. 4:: den Grundaufbau und die Funktionsweise eines Stellantriebes;
- Fig. 5a:: beispielhaft einen Querschnitt durch den Stellantrieb des Wandlers gemäß Figur 4 und
- Fig. 5b:: einen Ausschnitt des Stellantriebs gemäß Figur 5a.

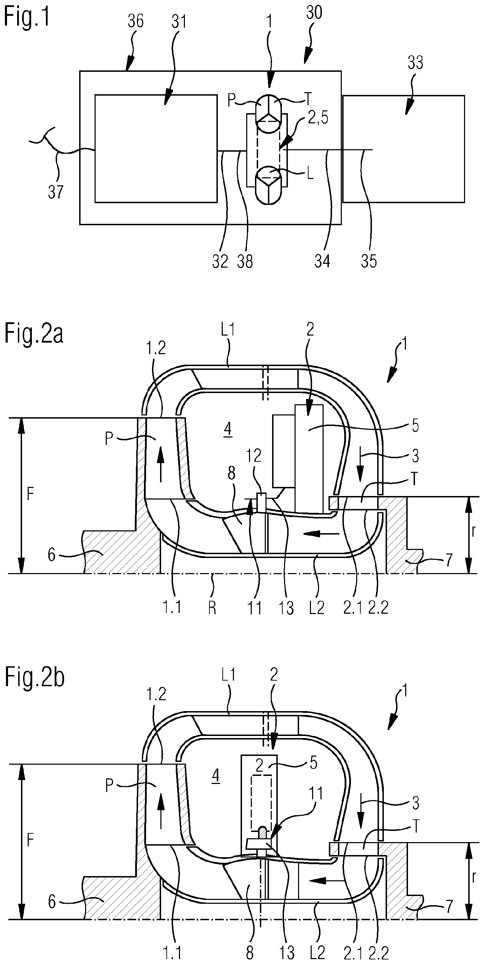

Die Figur 1 verdeutlicht in schematisiert stark vereinfachter Darstellung eine erfindungsgemäß ausgebildete Unterwasser-Antriebseinheit 30 mit einem elektrischen Motor 31 und einem mit dem elektrischen Motor 31, insbesondere einer Antriebswelle 32 verbundenen hydrodynamischen Drehzahl-/Drehmomentwandler 1, nachfolgend kurz Wandler genannt, mit zumindest einem um eine Drehachse R rotierbaren Pumpenrad P, zumindest einem um eine Drehachse R rotierbaren Turbinenrad T und zumindest einem Leitrad L, wobei die Schaufelräder einen mit Betriebsmittel durchströmbaren Arbeitsraum 10 zur Ausbildung einer hydrodynamischen Kreislaufströmung bilden. Die Unterwasser-Antriebseinheit 30 dient dabei der wenigstens mittelbaren, d.h. direkt oder über weitere Übertragungselemente erfolgenden Kopplung mit einer drehzahlvariabel antreibbaren Maschine 33, welche als Arbeitsmaschine in Form eines Kompressors oder einer Pumpe vorliegen kann oder einer im Kraftfluss zur Arbeitsmaschine liegenden Maschine entspricht. Im letztgenannten Fall kann es sich beispielsweise wie für eine Unterwasser-Antriebseinheit in WO 2013/077744 A1 beschrieben um einen Generator handeln, der vom elektrischen Motor 31 über den Wandler 1 mit variabler Drehzahl angetrieben wird, wobei der Generator wiederum mit einem weiteren elektrischen Motor zum Antrieb einer Arbeitsmaschine verbunden ist. Dazu ist die Ausgangswelle 34 des Wandlers 1, welche der Turbinenradwelle oder einem mit diesem drehfest verbundenen Bauteil entsprechen kann, mit der Maschine 33, insbesondere einer Antriebswelle 35 dieser verbunden. Der elektrische Motor 31 und der hydrodynamische Drehzahl-/Drehmomentwandler 1 sind von einem Gehäuse 36 umgeben, welches mit Druckmittel, insbesondere einer Flüssigkeit oder Gas befüllbar und beim Einsatz unter Wasser befüllt ist. Derartige Antriebseinheiten 30 sind in der Regel unter Wasser zur Kopplung zwischen einem unter Wasser befindlichen Endbereich einer elektrischen Leitung 37 und entweder direkt einer Arbeitsmaschine oder einer Maschine in der Übertragungskette zur Antriebsmaschine verbunden. Um die gewünschte Drehzahl an der Maschine 33 einstellen zu können, weist der hydrodynamische Drehzahl-/Drehmomentwandler 1 zumindest eine hier nicht im Einzelnen dargestellte Stellschaufel auf, die durch eine Verstellvorrichtung 2 verstellbar ist. Die Verstellvorrichtung 2 umfasst dazu einen mit der wenigstens einen Stellschaufel zur Übertragung einer Stellkraft gekoppelten Stellantrieb 5, der für den Einsatz mit begrenzt zur Verfügung stehendem Bauraumbedarf koaxial zur Drehachse R der Schaufelräder angeordnet ist. In besonders vorteilhafter Weise ist der Stellantrieb 5 axialer Richtung der Unterwasser-Antriebseinheit 30 betrachtet innerhalb der radialen Erstreckung der elektrischen Maschine 31 und/oder des Wandlers 1 angeordnet. In der Figur 1 beispielhaft wiedergegeben ist eine vorteilhafte Anordnung innerhalb der radialen Erstreckung des Wandlers 1, wobei die Anordnung nur schematisch angedeutet ist.

Besonders vorteilhaft ist es, wenn die zumindest eine hier im Einzelnen nicht dargestellte Stellschaufel 8 an einem Leitrad L des hydrodynamischen Drehzahl-/Drehmomentwandlers 1 vorgesehen ist. Das Leitrad L ist entweder ortsfest oder stützt sich über einen Freilauf ab.

Figuren 2a und 2b zeigen jeweils in einem Längsschnitt durch eine schematisiert stark vereinfachte Darstellung eines hydrodynamischen Drehzahl-/Drehmomentwandlers, nachfolgend kurz Wandler 1 genannt, besonders vorteilhafte Anordnungen und Ausbildungen einer Verstellvorrichtung 2. Derartige Wandler 1 werden zum Zweck der Drehzahl- und/oder Drehmomentenwandlung in Antriebssträngen eingesetzt. Diese umfassen mindestens jeweils eines der nachfolgend genannten Schaufelräder: ein Pumpenrad P, ein Turbinenrad T und ein Leitrad L. Dabei sind das Pumpenrad und das Turbinenrad T um eine geometrische Drehachse R rotierbar. Das Leitrad L ist in der Regel ortsfest oder stützt sich über einen Freilauf an einem Bauteil, vorzugsweise ortsfesten Bauteil ab. Die Schaufelräder bilden einen mit Betriebsmittel durchströmbaren Arbeitsraum 10 zur Ausbildung einer hydrodynamischen Kreislaufströmung 3, wobei das Leitrad L wenigstens eine durch eine Verstellvorrichtung 2 verstellbare Stellschaufel 8 oder zumindest ein verstellbares Schaufelsegment 9 an einer Schaufel der Beschaufelung aufweist. Die Verstellvorrichtung 2 umfasst einen im Kernraum 4 der Kreislaufströmung 3 angeordneten und mit der wenigstens einen Stellschaufel 8 oder dem verstellbaren Schaufelsegment 9 zur Übertragung einer Stellkraft gekoppelten Stellantrieb 5. Der Kernraum 4 ist dabei der Raum, welcher von der sich im Betrieb einstellenden Kreislaufströmung 2 umschlossen wird. Bauteilmäßig liegt der Kernraum 4 im von den inneren Begrenzungsflächen der Schaufelräder P, L, T umschlossenen Bauraum.

Das Pumpenrad P ist entweder drehfest bzw. mitnahmefest mit einer Antriebswelle 6 gekoppelt oder bildet diese in integraler Ausführung. Das Turbinenrad T ist entweder drehfest bzw. mitnahmefest mit einer Abtriebswelle 7 gekoppelt oder bildet diese bei integraler Ausführung. Das Leitrad L, hier die beiden Leiträder L1 und L2 stützen sich vorzugsweise an einem hier nicht dargestellten Gehäuse ab.

Der Stellantrieb 5 ist mit der wenigstens einen Stellschaufel 8 oder dem verstellbaren Schaufelsegment 9 direkt oder wie in den Figuren 2a und 2b schematisiert verdeutlicht über eine Übertragungseinrichtung 11 verbunden. Die Übertragungseinrichtung 11 kann verschiedenartig ausgebildet sein und eine Übersetzung zwischen den Verstellbewegungen von Stellantrieb 5 und Stellschaufel 8 realisieren sowie die Stellkraft mit unterschiedlicher Richtung an der Stellschaufel 8 einleiten.

Figur 2a zeigt beispielhaft eine Ausbildung, bei welcher die mit dem Stellantrieb 5 gekoppelte Übertragungseinrichtung 11 und der Stellantrieb 5 nicht in einer axialen Ebene angeordnet sind. Die Übertragungseinrichtung 11 ermöglicht eine Richtungsänderung der Stellkraft bei Einleitung in die Stellschaufel 8 und kann Versatz in axialer als auch radialer Richtung zwischen Stellschaufel 8 und Stellantrieb 5 überbrücken. Die Übertragungseinrichtung 11 umfasst hier beispielsweise einen mit dem Stellantrieb 5 gekoppelten Zapfen, welcher an einem an der Stellschaufel 8 befestigten Hebel 13 wirksam wird. Der Hebel 13 ist mit der Stellschaufel 8 verbunden und bewirkt eine Verdrehung um eine Dreh- oder Schwenkachse 12, welche von einem Zapfen zur Lagerung der Stellschaufel 8 gebildet werden.

Demgegenüber zeigt Figur 2b eine Ausführung, bei welcher Stellantrieb 5 und Übertragungseinrichtung 11 in einer axialen Ebene angeordnet sind.

Nicht explizit dargestellt ist eine Ausführung mit direkter Kopplung zwischen Stellantrieb 5 und Stellschaufel 8. In diesem Fall wird die Funktion der Übertragungseinrichtung 11 mit vom Stellantrieb 5 übernommen bzw. die Übertragungseinrichtung 11 ist integraler Bestandteil des Stellantriebes 5. Die Kopplung kann beispielsweise über den Eingriff zweier Verzahnungen realisiert werden, wobei eine erste Verzahnung am Stellantrieb 5 vorgesehen ist, welche sich beispielsweise am Ausgangselement des Stellantriebes 5 über einen Teilbereich von dessen Erstreckung in Umfangsrichtung um die Drehachse R erstreckt. Die zweite Verzahnung ist dann beispielsweise an einem an der Stellschaufel 8 zur drehbaren Lagerung dessen vorgesehenen Drehzapfen angeordnet. Andere Ausbildungen sind denkbar.

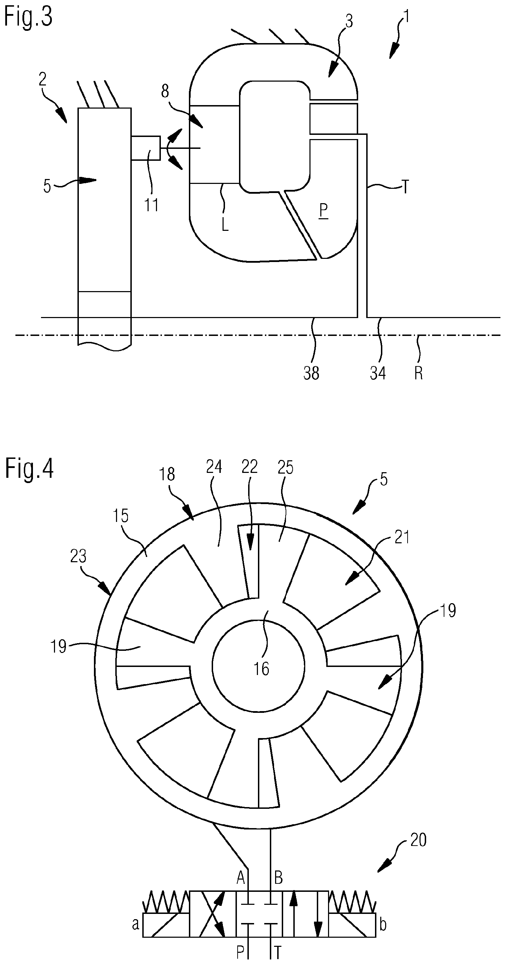

Die Figur 3 zeigt anhand eines Ausschnittes aus einem Axialschnitt eines Wandlers 1 eine alternative Anordnung des Stellantriebes 5 in axialer Richtung neben dem Wandler 1, d.h. in Einbaulage bei Kopplung der Antriebswelle 32 der elektrischen Maschine 31 mit einer Eingangswelle des Wandlers, welche der Pumpenradwelle 38 oder einem drehfest mit diesem gekoppelten Bauteil entsprechen kann, zwischen elektrischer Maschine 31 und Wandler 1. Auch hier erfolgt die Anordnung des Stellantriebes 5 in Form eines Drehkolbenstellers koaxial zu den Drehachsen R der Schaufelräder.

Der Stellantrieb 5 ist in einer besonders vorteilhaften Ausbildung im einfachsten Fall bei allen Anordnungen als Ringkolbensteller ausgeführt. Derartige Stellantriebe sind beispielhaft in den Figuren 4 bis 5b wiedergegeben.

Der Stellantrieb 5 weist beispielsweise Ringelemente 18, 19 auf, die jeweils koaxial zur Drehachse R angeordnet sind, d.h. die beiden Ringelemente 18, 19 sind auch konzentrisch angeordnet (siehe auch Figuren 4 bis 5b).

Das erste Ringelement 18 ist bezogen auf das zweite Ringelement 19 in Umfangsrichtung der Drehachse R verdrehbar. Durch die Drehbewegungen des ersten Ringelements 18 wird die Übertragungseinrichtung 11 betätigt, die die Drehbewegung des Ringelements 18 auf die Stellschaufel 8 überträgt und den Anstellwinkel der Stellschaufel 8 ändert. Denkbar, jedoch hier nicht dargestellt, ist auch die Möglichkeit die Funktionszuordnung der beiden dargestellten Ringelemente 18 und 19 zu tauschen. D.h. das hier dargestellte äußere Ringelement 18 würde als feststehendes und damit zweites Ringelement fungieren, während das innere Ringelement 19 dann die Funktion des gegenüber diesem in Umfangsrichtung relativ verdrehbaren Ringelementes übernehmen würde.

Konkret ist bei dem Ausführungsbeispiel gemäß Figur 4 bei Einsatz in einer Ausführung gemäß den Figuren 2a und 2b das zweite Ringelement 19 innen angeordnet und drehfest mit einem der Leiträder L1 oder L2 verbunden. Das drehbar gelagerte erste Ringelement 18 bildet ein zylinderförmiges Gehäuse 23, das das zweite Ringelement 19 umschließt. Mit anderen Worten ist das zweite Ringelement 19 im ersten Ringelement 18 angeordnet. Dazu weist das erste Ringelement 18 eine in axialer Richtung außen angeordnete und hier nicht dargestellte erste Stirnwand sowie eine in axialer Richtung innen angeordnete zweite Stirnwand auf, die das Gehäuse 23 in axialer Richtung begrenzen. Das Gehäuse 23 weist dann ferner einen Außenring 15 auf, der das Gehäuse 23 in radialer Richtung begrenzt und der zwischen den beiden hier nicht dargestellten Stirnwänden angeordnet ist. Das Gegenstück zum Außenring 15 bildet der Innenring 16 des zweiten Ringelements 19, der direkt mit dem Leitrad L2 verbunden ist. Im Zusammenspiel mit den axialen Stirnwänden ist zwischen dem ersten und zweiten Ringelement 18, 19 ein Ringraum gebildet.

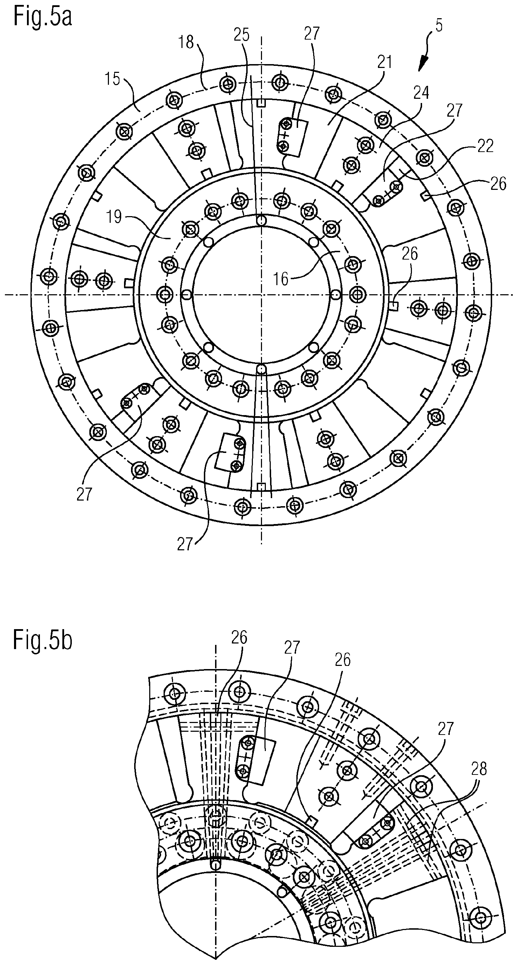

In Figuren 4 und 5a, 5b ist ein Querschnitt der beiden montierten Ringelemente 18, 19 dargestellt, aus dem der Ringraum sowie die darin angeordneten Einbauten ersichtlich ist. Die beiden Ringelemente 18, 19 weisen jeweils radial angeordnete Flügel 24, 25 auf, die durch die Relativdrehung zwischen dem ersten und zweiten Ringelement 18, 19 als Drehflügel fungieren. Konkret weist das erste Ringelement 18 erste Flügel 24 auf, die am Außenring 15 befestigt sind und sich radial nach innen erstrecken. Das zweite Ringelement 19 weist zweite Flügel 25 auf, die am Innenring 16 ausgebildet sind und sich radial nach außen erstrecken. Die Flügel 24, 25 der beiden Ringelemente 18, 19 sind somit gegengleich angeordnet.

Zwischen den Flügeln 24, 25 der beiden Ringelemente 18, 19 sind Druckkammern 21, 22 ausgebildet, deren Volumen durch die Stellung der jeweiligen Flügel 24, 25 veränderbar ist. Mit anderen Worten ist der Abstand der Flügel 24, 25 in Umfangsrichtung durch eine Verdrehung des ersten Ringelements 18 veränderbar.

Jeweils ein Flügel 24 des ersten Ringelements 18 und ein weiterer Flügel 25 des zweiten Ringelements 19 begrenzen zusammen eine erste Druckkammer 21. Dazu liegt der erste Flügel 24 des ersten Ringelements 18 am Innenring 16 des zweiten Ringelements 19 dichtend an. Dasselbe gilt für den zweiten Flügel 25 des zweiten Ringelements 19 in entsprechender Weise, der am Innenumfang des Außenrings 15 des ersten Ringelements 18 dichtend anliegt. Die beiden Flügel 24, 25 erstrecken sich überdies in axialer Richtung zwischen den hier nicht dargestellten axialen Stirnwänden, an denen die Flügel 24, 25 ebenfalls dichtend anliegen, sodass insgesamt eine geschlossene Druckkammer 21 gebildet ist, die in Umfangsrichtung von den Flügeln 24, 25 und in radialer Richtung vom Außenring 15 und vom Innenring 16 begrenzt ist.

In Umfangsrichtung der beiden Ringelemente 18, 19 ist eine weitere Druckkammer 22 ausgebildet, die in entsprechender Weise von den Flügeln 24, 25 der beiden Ringelemente 18, 19 begrenzt ist.

Mit anderen Worten ist ein erster Flügel 24 des ersten Ringelements 18 zwischen zwei zweiten Flügeln 25 des zweiten Ringelements 19 angeordnet, so dass auf beiden Seiten des ersten Flügels 24 jeweils ein Druckraum 21, 22 ausgebildet ist. Wie in den Figuren 2 und 3a, 3b zu erkennen, sind auf dem Umfang der beiden Ringelemente 18, 19 mehrere Druckkammern 21, 22 in entsprechender Weise ausgebildet, wobei jeweils ein erster Flügel 24 des ersten Ringelements 18 und ein zweiter Flügel 25 des zweiten Ringelements 19 alternierend angeordnet sind. Dadurch werden auf dem Umfang verteilt angeordnete Druckkammern 21, 22 gebildet, die sich auf beiden Seiten der ersten Flügel 24 des ersten Ringelements 18 erstrecken.

Die Druckkammern 21, 22 sind zur Erzeugung der relativen Drehung zwischen den beiden Ringelementen 18, 19 jeweils mit den Druck beaufschlagbar. Bei dem Ausführungsbeispiel gemäß den Figuren 4 bis 5b wird der Druck hydraulisch, beispielsweise eine hydraulische Steuereinheit 20 erzeugt. Bei dem in Figur 4a dargestellten Betriebszustand herrscht in der ersten Druckkammer 21 ein höherer Druck als in der zweiten Druckkammer 22, so dass der erste Flügel 24 und damit das Ringelement 18 im Uhrzeigersinn verdreht ist. Durch eine Änderung der Druckverhältnisse in den beiden Druckkammern 21, 22 ist eine Verstellung des ersten Ringelements 18 im Gegenuhrzeigersinn möglich.

Das erste Ringelement 18 fungiert damit als Ringkolben.

Zur Begrenzung der Hubbewegung des ersten Ringelements 18 in Umfangsrichtung sind Anschläge 27 vorgesehen, gegen die der erste Flügel 24 des ersten Ringelements 18 anschlägt. Die Anschläge 27 können beispielsweise als austauschbare Einstellsteine ausgebildet sein, die mit den zweiten Flügeln 25 des zweiten Ringelements 19 verschraubt oder anderweitig befestigt sind.

Die Anschläge 27 sind wie in Figur 5a dargestellt, sowohl auf beiden Seiten eines ersten Flügels 24 des ersten Ringelements 18 angeordnet, um die Verstellbewegung in beiden Umfangsrichtungen zu begrenzen. Außerdem sind weitere Anschläge 27 punktsymmetrisch auf der gegenüberliegenden Seite des ersten Ringelements 18 angeordnet.

In der Detaildarstellung gemäß Figur 5b sind weitere Einzelheiten des Stellantriebs 17 zu erkennen. So ist beispielsweise Figur 4b zu entnehmen, dass im zweiten Ringelement 19 Bohrungen 28 ausgebildet sind, die als Druckkanäle zur Zufuhr der Hydraulikflüssigkeit dienen. Konkret sind die Druckkanäle im Innenring 16 ausgebildet und erstrecken sich durch die zweiten Flügel 25 radial nach außen. Die Bohrungen 28 münden in die jeweiligen Druckkammern 21, 22 im Bereich des Außendurchmessers der Druckkammern 21, 22. Mit anderen Worten ist der Abstand in den Mündungsöffnungen der Bohrungen 28 zum Außenring 15 sehr viel kleiner als der Abstand zum Innenring 16. Dadurch wird eine Spülwirkung erreicht, mit der weitgehend eine Anlagerung von Verunreinigungen am Außenring 15 verhindert wird.

Die Zufuhrkanäle, die die Bohrungen 28 des zweiten Ringelements 19 mit einer Zufuhreinrichtung (nicht dargestellt) verbinden, sind direkt in der Antriebswelle 12 oder in einem der Antriebswelle 12 zugeordneten Bauteil ausgebildet. Konkret kann zwischen dem Innenring 16 des zweiten Ringelements 19 und dem Leitrad L2 eine angeordnet, in der die Zufuhrkanäle für die Versorgung der Druckkammern 21, 22 mit Hydraulikflüssigkeit ausgebildet sind. Die Verbindung zwischen dem Innenring 16 und der Hülse kann beispielsweise kraftschlüssig erfolgen.

Die Übertragung der Drehbewegung des ersten Ringelements 18 auf die Stellschaufel 8 kann direkt oder über eine Übertragungseinrichtung 11 erfolgen.

Die konkrete konstruktive Ausbildung kann verschiedenartig ausgeführt werden.

Zusammengefasst funktioniert der Wandler 1 wie folgt:
Zur Verstellung der Beschaufelung des Pumpenrades 11 wird der Stellantrieb 17 betätigt. Dazu werden die Druckkammern 21, 22 mit unterschiedlichen Drücken beaufschlagt, so dass das erste Ringelement 18 bezogen auf das zweite Ringelement 19 in Umfangsrichtung verdreht wird. Durch die Drehbewegung wird die Übertragungseinrichtung 11 betätigt und wandelt die rotatorische Bewegung des ersten Ringelementes 18 in eine überlagerte translatorische / rotatorische Bewegung um, die eine Kippbewegung der Stellschaufel 8 bewirkt, so dass der gewünschte Anstellwinkel der Stellschaufel 8 eingestellt werden kann. Die Position der Stellschaufel 8 wird durch die Druckverhältnisse im Stellantrieb 8 gehalten

Bei dem in den Figuren 2a und 2b dargestellten Wandlern handelt es sich um einen Hochtriebswandler. Dieser umfasst ein Pumpenrad P, das im Betrieb von innen nach außen durchströmt ist; ein Turbinenrad T, das im Betrieb von außen nach innen durchströmt ist und erste Leitschaufeln zwischen Pumpenrad P und Turbinenrad T am Leitrad L1 sowie zweite Leitschaufeln zwischen Turbinenrad T und Pumpenrad P, wobei erste und zweite Leitschaufeln an unterschiedlichen Leiträdern L1, L2 und auf unterschiedlichen Durchmessern angeordnet sind und die zweiten Leitschaufeln wenigstens die zumindest eine Stellschaufel 8 oder ein verstellbares Schaufelsegment umfassen. Dabei liegen die Austrittskanten des Pumpenrades P auf einem Radius, der zwischen dem 1,2 bis 8-fachen des Radius r beträgt, auf welchem sich die Eintrittskanten des Turbinenrades T in Strömungsrichtung befinden. Vorteilhaft ist es, wenn dazu noch die Eintrittskanten der Schaufeln des Pumpenrades P auf einem größeren Radius als die Eintrittskanten der Schaufeln des Turbinenrades T liegen.

### Bezugszeichenliste

- 1: Wandler
- 2: Verstellvorrichtung
- 3: Kreislaufströmung
- 4: Kernraum
- 5: Stellantrieb
- 6: Antriebswelle
- 7: Abtriebswelle
- 8: Stellschaufel
- 9: Schaufelsegment
- 10: Arbeitsraum
- 11: Übertragungseinrichtung
- 12: Schwenkhebel
- 13: Hebel
- 15: Außenring
- 16: Innenring
- 18: erstes Ringelement
- 19: zweites Ringelement
- 20: hydraulische Steuereinheit
- 21: Druckkammer
- 22: Druckkammer
- 23: zylindrisches Gehäuse
- 24: Flügel
- 25: Flügel
- 26: Dichtelemente
- 27: Anschläge
- 28: Bohrungen
- 30: Unterwasser-Antriebseinheit
- 31: elektrischer Motor
- 32: Antriebswelle
- 33: Arbeitsmaschine
- 34: Ausgangswelle
- 35: Antriebswelle der Arbeitsmaschine
- 36: Gehäuse
- 37: elektrische Leitung
- 38: Pumpenradwelle
- P: Pumpenrad
- T: Turbinenrad
- L1, L2: Leitrad

## Patentansprüche

1. Unterwasser-Antriebseinheit (30) mit
- einem elektrischen Motor (31) und einem mit dem Motor (31) verbundenen hydrodynamischen Drehzahl-/Drehmomentwandler (1) mit zumindest einem um eine Drehachse (R) rotierbaren Pumpenrad (P), zumindest einem um eine Drehachse (R) rotierbaren Turbinenrad (T) und zumindest einem Leitrad (L, L1, L2), wobei die Schaufelräder einen mit Betriebsmittel durchströmbaren Arbeitsraum (10) zur Ausbildung einer hydrodynamischen Kreislaufströmung (3) bilden und ein Schaufelrad wenigstens eine Stellschaufel (8) oder ein verstellbares Schaufelsegment (9) aufweist, die/das durch eine Verstellvorrichtung (2) verstellbar ist;
- einer mit einer Maschine (33), insbesondere Arbeitsmaschine mit variabler Drehzahl zumindest mittelbar verbunden Ausgangswelle (34);
wobei die Verstellvorrichtung (2) einen mit der wenigstens einen Stellschaufel (8) oder dem verstellbaren Schaufelsegment (9) zur Übertragung einer Stellkraft gekoppelten Stellantrieb (5) umfasst, der koaxial zur Drehachse (R) der Schaufelräder angeordnet ist; und
die zumindest eine Stellschaufel (8) oder das verstellbare Schaufelsegment (9) an dem Leitrad (L, L1, L2) des hydrodynamischen Drehzahl-/Drehmomentwandlers (1) vorgesehen ist;
**dadurch gekennzeichnet,**
**dass** ein mit einem Druckmittel befüllbares Gehäuse (36) vorgesehen ist, welches den elektrischen Motor (31) und den hydrodynamischen Drehzahl-/Drehmomentwandler (1) gemeinsam umschließt;
**dass** der Stellantrieb (5) in axialer Richtung betrachtet dem hydrodynamischen Drehzahl-/Drehmomentwandler (1) nebengeordnet ist und durch eine maximale radiale Erstreckung charakterisiert ist, die innerhalb der maximalen radialen Erstreckung von elektrischem Motor (31) und hydrodynamischen Drehzahl-/Drehmomentwandler (1) liegt, und.
der Stellantrieb (5) Ringelemente (18, 19) aufweist, die jeweils koaxial zur Drehachse (R) angeordnet sind, wobei ein erstes Ringelement (18) mit der wenigstens einen Stellschaufel (8) oder dem verstellbaren Schaufelsegment (9) zur Übertragung einer Stellkraft oder eines Stellmomentes direkt oder über die Übertragungseinrichtung (11) verbunden ist und das erste Ringelement (18) relativ zu einem zweiten Ringelement (19) in Umfangsrichtung der Drehachse (R) verdrehbar ist, und
das erste und zweite Ringelement (18, 19) wenigstens zwei in Umfangsrichtung der Drehachse angeordnete Druckkammern (21, 22) bilden, die für die Relativdrehung zwischen dem ersten und zweiten Ringelement (18, 19) jeweils mit Druck beaufschlagbar sind.

2. Unterwasser-Antriebseinheit (30) nach Anspruch 1,
**dadurch gekennzeichnet,**
**dass** der Stellantrieb (5) mit der wenigstens einen Stellschaufel (8) oder dem verstellbaren Schaufelsegment (9) direkt oder über eine Übertragungseinrichtung (11) verbunden ist.

3. Unterwasser-Antriebseinheit (30) nach Anspruch 1 oder 2,
**dadurch gekennzeichnet,**
**dass** der Stellantrieb (5) und die Übertragungseinrichtung (11) in einer axialen Ebene angeordnet sind.

4. Unterwasser-Antriebseinheit (30) nach einem der Ansprüche 1 bis 3,
**dadurch gekennzeichnet,**
**dass** das zweite Ringelement (19) drehfest mit dem Leitrad (L, L1, L2) verbunden ist.

5. Unterwasser-Antriebseinheit (30) nach einem der Ansprüche 1 bis 4,
**dadurch gekennzeichnet,**
**dass** eines der beiden Ringelemente (18, 19) - das erste oder das zweite Ringelement - ein zylinderförmiges Gehäuse (23) bildet, in dem das andere der Ringelemente - zweites oder erstes Ringelement - unter Ausbildung eines Ringkolbens angeordnet ist, wobei das erste und zweite Ringelement (18, 19) jeweils radial sich erstreckende, gegengleich angeordnete Flügel aufweisen, die die Druckkammern (21, 22) in Umfangsrichtung begrenzen.

6. Unterwasser-Antriebseinheit (30) nach einem der Ansprüche 1 bis 5,
**dadurch gekennzeichnet,**
**dass** Bohrungen (28) in wenigstens einem Ringelement (18, 19), insbesondere im zweiten Ringelement (19), ausgebildet sind, die zur Druckbeaufschlagung in die Druckkammern (21, 22), insbesondere im Bereich des Außendurchmessers, münden.

7. Unterwasser-Antriebseinheit (30) nach einem der Ansprüche 1 bis 6,
**dadurch gekennzeichnet,**
**dass** ein Verstellring vorgesehen ist, der vom ersten Ringelement (18) gebildet ist oder als Bestandteil der Übertragungseinrichtung (11) drehfest mit dem ersten Ringelement (18) verbunden ist, wobei der Verstellring koaxial zur Drehachse (R) angeordnet und mit der wenigstens einen Stellschaufel (8) oder dem verstellbaren Schaufelsegment (9) zur Übertragung einer Stellkraft oder eines Stellmomentes gekoppelt ist.

8. Unterwasser-Antriebseinheit (30) nach Anspruch 7,
**dadurch gekennzeichnet,**
**dass** der Verstellring wenigstens einen Nocken aufweist, der mit einem Kurbeltrieb, insbesondere einem radial angeordneten Hebelelement, zusammenwirkt, wobei der Kurbeltrieb mit der Stellschaufel (8) oder dem verstellbaren Schaufelsegment (9) gekoppelt ist.

9. Unterwasser-Antriebseinheit (30) nach Anspruch 7,
**dadurch gekennzeichnet,**
**dass** das erste Ringelement (18) oder der mit diesem verbundene Verstellring eine Außenverzahnung aufweist, die mit der Außenverzahnung eines Zapfens der Stellschaufel (8) oder dem verstellbaren Schaufelsegment (9) kämmt.

10. Unterwasser-Antriebseinheit (30) nach einem der Ansprüche 1 bis 9,
**dadurch gekennzeichnet,**
**dass** die Stellschaufel (8) eine Stellschaufel oder eine mehrgliedrige Schaufel mit wenigstens einem verstellbaren Schaufelsegment (9), insbesondere Verdrehsegment umfasst.

11. Unterwasser-Antriebseinheit (30) nach einem der Ansprüche 1 bis 10,
**dadurch gekennzeichnet,**
**dass** der hydrodynamische Wandler (1) als ein Wandler ausgewählt aus der Gruppe von Wandlern ausgebildet ist:
- einstufiger Wandler
- mehrstufiger Wandler
- einphasiger Wandler
- mehrphasiger Wandler.

12. Unterwasser-Antriebseinheit (30) nach einem der Ansprüche 1 bis 11,
**dadurch gekennzeichnet,**
**dass** dieser aufweist:
ein Pumpenrad (P), das im Betrieb von innen nach außen durchströmt ist;
ein Turbinenrad (T), das im Betrieb von außen nach innen durchströmt ist;
erste Leitschaufeln im Strömungskreislauf (3) betrachtet zwischen Pumpenrad (P) und Turbinenrad (T);
zweite Leitschaufeln zwischen Turbinenrad (T) und Pumpenrad (P), wobei erste und zweite Leitschaufeln an unterschiedlichen Leiträdern (L1, L2) und auf unterschiedlichen Durchmessern angeordnet sind und die zweiten Leitschaufeln wenigstens eine Verstellschaufel (8) oder verstellbares Schaufelsegment (9) umfassen.

13. Unterwasser-Antriebseinheit (30) nach einem der Ansprüche 1 bis 12 zum Antrieb einer Arbeitsmaschine (33), ausgewählt aus der Gruppe nachfolgend genannter Arbeitsmaschinen verwendet wird:
- einer Pumpe
- einem Kompressor.

## Claims

1. Underwater drive unit (30) comprising
- an electric motor (31) and a hydrodynamic speed/torque converter (1) that is connected to the motor (31) and has at least one pump impeller (P) which can rotate about a rotation axis (R), at least one turbine wheel (T) which can rotate about a rotation axis (R) and at least one stator (L, L1, L2), wherein the blade wheels form a working space (10), through which operating media can flow, for forming a hydrodynamic circular flow (3) and one blade wheel has at least one actuating blade (8) or an adjustable blade segment (9) which can be adjusted by an adjusting apparatus (2);
- an output shaft (34) which is at least indirectly connected to a machine (33), in particular a working machine with a variable speed;
wherein the adjusting apparatus (2) comprises an actuating drive (5) which is coupled to the at least one actuating blade (8) or the adjustable blade segment (9) for transmitting an actuating force and is arranged coaxially in relation to the rotation axis (R) of the blade wheels; and
the at least one actuating blade (8) or the adjustable blade segment (9) is provided on the stator (L, L1, L2) of the hydrodynamic speed/torque converter (1); **characterized**
**in that** a housing (36) which can be filled with a pressure medium and jointly surrounds the electric motor (31) and the hydrodynamic speed/torque converter (1) is provided;
**in that** the actuating drive (5) is arranged next to the hydrodynamic speed/torque converter (1) as viewed in the axial direction and is **characterized by** a maximum radial extent which lies within the maximum radial extent of the electric motor (31) and the hydrodynamic speed/torque converter (1), and
the actuating drive (5) has ring elements (18, 19) which are each arranged coaxially in relation to the rotation axis (R), wherein a first ring element (18) is connected directly or via the transmission device (11) to the at least one actuating blade (8) or the adjustable blade segment (9) for transmitting an actuating force or an actuating torque and the first ring (18) can be rotated relative to a second ring element (19) in the circumferential direction of the rotation axis (R), and the first and the second ring element (18, 19) form at least two pressure chambers (21, 22) which are arranged in the circumferential direction of the rotation axis and to each of which pressure can be applied for the relative rotation between the first and the second ring element (18, 19).

2. Underwater drive unit (30) according to Claim 1,
**characterized**
**in that** the actuating drive (5) is connected directly or via a transmission device (11) to the at least one actuating blade (8) or to the adjustable blade segment (9) .

3. Underwater drive unit (30) according to Claim 1 or 2,
**characterized**
**in that** the actuating drive (5) and the transmission device (11) are arranged in an axial plane.

4. Underwater drive unit (30) according to one of Claims 1 to 3,
**characterized**
**in that** the second ring element (19) is connected in a rotationally fixed manner to the stator (L, L1, L2).

5. Underwater drive unit (30) according to one of Claims 1 to 4,
**characterized**
**in that** one of the two ring elements (18, 19) - the first or the second ring element - forms a cylindrical housing (23) in which the other of the ring elements - second or first ring element - is arranged so as to form an annular piston, wherein the first and the second ring element (18, 19) each have radially extending vanes which are arranged in a diametrically opposed manner and delimit the pressure chambers (21, 22) in the circumferential direction.

6. Underwater drive unit (30) according to one of Claims 1 to 5,
**characterized**
**in that** bores (28) are formed in at least one ring element (18, 19), in particular in the second ring element (19), and issue into the pressure chambers (21, 22), in particular in the region of the outside diameter, for pressure application purposes.

7. Underwater drive unit (30) according to one of Claims 1 to 6,
**characterized**
**in that** an adjusting ring, which is formed by the first ring element (18) or, as a constituent part of the transmission device (11), is connected in a rotationally fixed manner to the first ring element (18), is provided, wherein the adjusting ring is arranged coaxially in relation to the rotation axis (R) and is coupled to the at least one actuating blade (8) or the adjustable blade segment (9) for the purpose of transmitting an actuating force or an actuating torque.

8. Underwater drive unit (30) according to Claim 7,
**characterized**
**in that** the adjusting ring has at least one cam which interacts with a crank drive, in particular a radially arranged lever element, wherein the crank drive is coupled to the actuating blade (8) or the adjustable blade segment (9).

9. Underwater drive unit (30) according to Claim 7,
**characterized**
**in that** the first ring element (18) or the adjusting ring connected to it has an external toothing system which meshes with the external toothing system of a tenon of the actuating blade (8) or the adjustable blade segment (9) .

10. Underwater drive unit (30) according to one of Claims 1 to 9,
**characterized**
**in that** the actuating blade (8) comprises an actuating blade or a multiple-element blade with at least one adjustable blade segment (9), in particular rotary segment.

11. Underwater drive unit (30) according to one of Claims 1 to 10,
**characterized**
**in that** the hydrodynamic converter (1) is designed as a converter selected from the group of converters comprising:
- single-stage converter
- a multi-stage converter
- a single-phase converter
- a multi-phase converter.

12. Underwater drive unit (30) according to one of Claims 1 to 11,
**characterized**
**in that** it has:
a pump impeller (P) through which media flows from the inside to the outside during operation;
a turbine wheel (T) through which media flows from the outside to the inside during operation;
first guide blades between the pump impeller (P) and the turbine wheel (T) as viewed in the flow circuit (3),
second guide blades between the turbine wheel (T) and the pump impeller (P), wherein the first and the second guide blades are arranged on different stators (L1, L2) and at different diameters and the second guide blades comprise at least one adjusting blade (8) or adjustable blade segment (9).

13. Underwater drive unit (30) according to one of Claims 1 to 12 for driving a working machine (33), selected from the group of working machines mentioned below is used:
- a pump
- a compressor.

## Revendications

1. Unité d'entraînement immergée (30), comprenant
- un moteur électrique (31) et un convertisseur de vitesse de rotation/couple hydrodynamique (1) relié au moteur (31) et pourvu d'au moins une roue de pompe (P) pouvant tourner autour d'un axe de rotation (R), d'au moins une roue de turbine (T) pouvant tourner autour d'un axe de rotation (R) et d'au moins une roue directrice (L, L1, L2), les roues à aubes formant un espace de travail (10) pouvant être traversé par un fluide fonctionnel pour réaliser un écoulement circulaire hydrodynamique (3), et une roue à aube présente au moins une aube de réglage (8) ou un segment d'aube ajustable (9) qui peut être ajusté (e) par un dispositif d'ajustage (2) ;
- un arbre de sortie (34) relié au moins indirectement à une machine (33), en particulier à une machine de travail à vitesse de rotation variable ;
le dispositif d'ajustage (2) comprenant un entraînement de réglage (5) couplé à ladite au moins une aube de réglage (8) ou au segment d'aube ajustable (9) pour la transmission d'une force de réglage et qui est disposé coaxialement à l'axe de rotation (R) des roues à aube ; et
ladite au moins une aube de réglage (8) ou le segment d'aube ajustable (9) est prévu (e) sur la roue directrice (L, L1, L2) du convertisseur de vitesse de rotation/couple hydrodynamique (1) ;
**caractérisée en ce qu'**un carter (36) pouvant être rempli avec un fluide sous pression est prévu qui entoure conjointement le moteur électrique (31) et le convertisseur de vitesse de rotation/couple hydrodynamique (1) ;
**en ce que** l'entraînement de réglage (5), vu dans la direction axiale, est placé à côté du convertisseur de vitesse de rotation/couple hydrodynamique (1) et est **caractérisé par** une extension radiale maximale qui est comprise dans l'extension radiale maximale du moteur électrique (31) et du convertisseur de vitesse de rotation/couple hydrodynamique (1), et
l'entraînement de réglage (5) présente des éléments annulaires (18, 19) qui sont disposés respectivement de manière coaxiale à l'axe de rotation (R), un premier élément annulaire (18) étant relié à ladite au moins une aube de réglage (8) ou au segment d'aube ajustable (9) pour transmettre une force de réglage ou un couple de réglage directement ou par l'intermédiaire d'un dispositif de transmission (11), et le premier élément annulaire (18) pouvant tourner par rapport à un deuxième élément annulaire (19) dans la direction circonférentielle de l'axe de rotation (R), et
le premier et le deuxième élément annulaire (18, 19) forment au moins deux chambres de pression (21, 22), disposées dans la direction circonférentielle de l'axe de rotation, qui peuvent être mises en pression respectivement pour la rotation relative entre le premier et le deuxième élément annulaire (18, 19).

2. Unité d'entraînement immergée (30) selon la revendication 1, **caractérisée en ce que** l'entraînement de réglage (5) est relié à ladite au moins une aube de réglage (8) ou au segment d'aube ajustable (9) directement ou par l'intermédiaire d'un dispositif de transmission (11).

3. Unité d'entraînement immergée (30) selon la revendication 1 ou 2, **caractérisée en ce que** l'entraînement de réglage (5) et le dispositif de transmission (11) sont disposés dans un plan axial.

4. Unité d'entraînement immergée (30) selon l'une quelconque des revendications 1 à 3, **caractérisée en ce que** le deuxième élément annulaire (19) est relié à la roue directrice (L, L1, L2) de manière verrouillée en rotation.

5. Unité d'entraînement immergée (30) selon l'une quelconque des revendications 1 à 4, **caractérisée en ce que** l'un des deux éléments annulaires (18, 19) - le premier ou le deuxième élément annulaire - forme un carter cylindrique (23) dans lequel est disposé l'autre des éléments annulaires - le deuxième ou le premier élément annulaire - en réalisant un piston annulaire, le premier et le deuxième élément annulaire (18, 19) présentant respectivement des ailes diamétralement opposées et s'étendant radialement qui délimitent les chambres de pression (21, 22) dans la direction circonférentielle.

6. Unité d'entraînement immergée (30) selon l'une quelconque des revendications 1 à 5, **caractérisée en ce que** des alésages (28) sont réalisés dans au moins un élément annulaire (18, 19), en particulier dans le deuxième élément annulaire (19), qui débouchent sur les chambres de pression (21, 22), en particulier au niveau du diamètre extérieur, pour la mise en pression.

7. Unité d'entraînement immergée (30) selon l'une quelconque des revendications 1 à 6, **caractérisée en ce qu'**une bague d'ajustage est prévue qui est formée par le premier élément annulaire (18) ou est reliée au premier élément annulaire (18) de manière verrouillée en rotation en faisant partie intégrante du dispositif de transmission (11), la bague d'ajustage étant disposée coaxialement par rapport à l'axe de rotation (R) et étant couplée à ladite au moins une aube de réglage (8) ou au segment d'aube ajustable (9) pour transmettre une force de réglage ou un couple de réglage.

8. Unité d'entraînement immergée (30) selon la revendication 7, **caractérisée en ce que** la bague d'ajustage présente au moins une came qui coopère avec un mécanisme à manivelle, en particulier un élément à levier disposé radialement, le mécanisme à manivelle étant couplé à l'aube de réglage (8) ou au segment d'aube ajustable (9).

9. Unité d'entraînement immergée (30) selon la revendication 7, **caractérisée en ce que** le premier élément annulaire (18) ou la bague d'ajustage reliée à celui-ci présente une denture extérieure qui s'engrène avec la denture extérieure d'un tourillon de l'aube de réglage (8) ou du segment d'aube ajustable (9).

10. Unité d'entraînement immergée (30) selon l'une quelconque des revendications 1 à 9, **caractérisée en ce que** l'aube de réglage (8) comprend une aube de réglage ou une aube à plusieurs sections, dotée d'au moins un segment d'aube ajustable (9), en particulier d'un segment de torsion.

11. Unité d'entraînement immergée (30) selon l'une quelconque des revendications 1 à 10, **caractérisée en ce que** le convertisseur hydrodynamique (1) est réalisé sous la forme d'un convertisseur sélectionné dans le groupe de convertisseurs suivant :
- convertisseur à un étage,
- convertisseur à plusieurs étages,
- convertisseur à une phase,
- convertisseur à plusieurs phases.

12. Unité d'entraînement immergée (30) selon l'une quelconque des revendications 1 à 11, **caractérisée en ce qu'**elle présente :
une roue de pompe (P) qui est traversée de l'intérieur vers l'extérieur en cours de fonctionnement ;
une roue de turbine (T) qui est traversée de l'extérieur vers l'intérieur en cours de fonctionnement ;
des premières aubes directrices entre la roue de pompe (P) et la roue de turbine (T), vues dans le circuit d'écoulement (3) ;
des deuxièmes aubes directrices entre la roue de turbine (T) et la roue de pompe (P), les premières et deuxièmes aubes directrices étant disposées sur différentes roues directrices (L1, L2) et sur différents diamètres, et les deuxièmes aubes directrices comprenant au moins une aube de réglage (8) ou un segment d'aube ajustable (9).

13. Unité d'entraînement immergée (30) selon l'une quelconque des revendications 1 à 12 destinée à entraîner une machine de travail (33) sélectionnée dans le groupe des machines de travail mentionnées ci-après est utilisée :
- une pompe,
- un compresseur.
